# EUROPEAN PATENT APPLICATION

(11) **EP 4 815 550 A1**
(43) Date of publication of application: **30.09.2026**
(21) Application number: 25166442.1
(22) Date of filing: 26.03.2025
(51) Int. Cl.: H04W 24/10, H04W 24/02

(54) **PHASE DISCONTINUITY PREDICTION**

(71) Applicant: Nokia Technologies Oy, 02610 Espoo (FI)
(72) Inventor: Azari, Mahdi, 91300 Massy (FR); Marcone, Alessio, 81541 Munich (DE); Ahmadian Tehrani, Amir, 81541 Munich (DE)
(74) Representative: Mudge, Kevin

(57) **Abstract**

Examples of the disclosure relate to phase discontinuity predictions. A UE can indicate to a network node a capability of the UE for phase discontinuity prediction and receive, from the network node, a configuration for phase discontinuity prediction outcome reporting. The configuration can comprise at least a reporting indication method and one or more reporting conditions. The reporting indication method comprises an indication of a clear time duration for which phase discontinuity satisfies a reporting condition The UE can perform the phase discontinuity prediction and determine whether to report an outcome of the phase discontinuity prediction based on the received configuration.

## Description

### TECHNOLOGICAL FIELD

Examples of the disclosure relate to phase discontinuity predictions. Some relate to phase discontinuity predictions in where the prediction is performed using a machine learning model.

### BACKGROUND

Joint channel estimation (JCE) for physical uplink shared channel (PUSCH) can be used to enhance uplink (UL) coverage for both data channels and control channels. To allow for JCE to take place phase continuity across slots for JCE should be maintained at the user equipment (UE) side.

### BRIEF SUMMARY

According to various, but not necessarily all, examples of the disclosure there is provided a user equipment (UE) comprising:
at least one processor; and
at least one memory storing instructions that, when executed by the at least one processor, cause the UE to perform at least:
   indicating to a network node a capability of the UE for phase discontinuity prediction;
   receiving, from the network node, a configuration for phase discontinuity prediction outcome reporting, the configuration comprising at least a reporting indication method and one or more reporting conditions;
   performing phase discontinuity prediction; and
   determining whether to report an outcome of the phase discontinuity prediction based on the received configuration.

The phase discontinuity prediction may be performed using a machine learning model.

The one or more reporting conditions may comprise one or more thresholds for a probability of phase discontinuity. Different thresholds may be associated with different use cases.

The configuration may be received via at least one of; radio resource configuration signalling; and downlink control information.

The phase discontinuity prediction may relate to one of: a probability of a single event causing a phase discontinuity; and a probability of multiple events causing a cumulative phase discontinuity.

The reporting indication method may comprise one of: a bit indicating whether a reporting condition is satisfied; a value indicating a probability that an event or multiple events causes phase discontinuity; a value indicating the outcome of the phase discontinuity prediction; and an indication of a time duration for which the phase discontinuity satisfies a reporting condition.

The memory and computer program may also be configured to receive an indication of event parameters and one or more thresholds for a probability of phase discontinuity associated with the event parameters.

The one or more reporting conditions received from the network node may comprise a first reporting condition for use in a first scenario and a second reporting condition for use in a second scenario.

According to various, but not necessarily all, examples of the disclosure there may be provided a method comprising:
indicating to a network node a capability of the UE for phase discontinuity prediction;
receiving, from the network node, a configuration for phase discontinuity prediction outcome reporting, the configuration comprising at least a reporting indication method and one or more reporting conditions;
performing phase discontinuity prediction; and
determining whether to report an outcome of the phase discontinuity prediction based on the received configuration.

According to various, but not necessarily all, examples of the disclosure there may be provided a computer program comprising computer program instructions for causing a UE to perform at least the following or for performing at least the following:
indicating to a network node a capability of the UE for phase discontinuity prediction;
receiving, from the network node, a configuration for phase discontinuity prediction outcome reporting, the configuration comprising at least a reporting indication method and one or more reporting conditions;
performing phase discontinuity prediction; and
determining whether to report an outcome of the phase discontinuity prediction based on the received configuration.

According to various, but not necessarily all, examples of the disclosure there may be provided a network node comprising:
at least one processor; and
at least one memory storing instructions that, when executed by the at least one processor, cause the network node to perform at least:
   receiving from a UE a capability of the UE for phase discontinuity prediction;
   sending to the UE, a configuration for phase discontinuity prediction outcome reporting, the configuration comprising at least a reporting indication method and one or more reporting conditions; and
   receiving from the UE a report indicating the outcome of the phase discontinuity prediction where the report is based on the configuration.

The one or more reporting conditions may comprise one or more thresholds for a probability of phase discontinuity calculation. Different thresholds are associated with different use case scenarios.

The configuration may be sent via at least one of; radio resource configuration signalling; and downlink control information.

The phase discontinuity prediction may relate to one of: a probability of a single event causing a phase discontinuity; and a probability of multiple events causing a cumulative phase discontinuity.

The reporting indication method may comprise one of: a bit indicating whether a reporting condition is satisfied; a value indicating a probability that an event or multiple events causes phase discontinuity; a value indicating the outcome of the phase discontinuity prediction; and an indication of a time duration for which the phase discontinuity satisfies a reporting condition.

The processor and memory may also be arranged to cause the network node to perform determining a probability that an event or multiple events causes phase discontinuity based on a received value indicating the outcome of the phase discontinuity prediction.

The processor and memory may also be arranged to cause the network node to perform at least one of: adjusting one or more reporting conditions; or disabling reporting of the phase discontinuity prediction.

According to various, but not necessarily all, examples of the disclosure there may be provided a method comprising:
receiving from a UE a capability of the UE for phase discontinuity prediction;
sending to the UE, a configuration for phase discontinuity prediction outcome reporting, the configuration comprising at least a reporting indication method and one or more reporting conditions; and
receiving from the UE a report indicating the outcome of the phase discontinuity prediction where the report is based on the configuration.

According to various, but not necessarily all, examples of the disclosure there may be provided a computer program comprising computer program instructions for causing a UE to perform at least the following or for performing at least the following:
receiving from a UE a capability of the UE for phase discontinuity prediction;
sending to the UE, a configuration for phase discontinuity prediction outcome reporting, the configuration comprising at least a reporting indication method and one or more reporting conditions; and
receiving from the UE a report indicating the outcome of the phase discontinuity prediction where the report is based on the configuration.

According to various, but not necessarily all, embodiments there is provided an apparatus comprising:
at least one processor; and
at least one memory;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or instructions as desired, and as appropriate. The description of a function should additionally be considered to also disclose any means suitable for performing that function

### BRIEF DESCRIPTION

Some examples will now be described with reference to the accompanying drawings in which:
FIG. 1 shows an example network;
FIG. 2 shows an example of OCC;
FIGS. 3A and 3B show example methods;
FIG. 4 shows an example signalling procedure;
FIG. 5 shows an example RL model;
FIG. 6 shows a method of using an RL model; and
FIG. 7 shows an example controller.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DEFINITIONS

- AI: Artificial Intelligence
- BW: Bandwidth
- CP-OFDM: Cyclic Prefix - OFDM
- DCl: Downlink Control Information
- DFT-S-OFDM: Discrete Fourier Transform Spread OFDM
- DL: Downlink
- DMRS: De-Modulation Reference Signal
- GNSS: Global Navigation Satellite System
- HARQ-ACK: Hybrid Automatic Repeat Request -Acknowledgement
- HW: Hardware
- JCE: Joint Channel Estimation
- KPI: Key Performance Indicator
- MAC-CE: Media Access Control- Control Element
- ML: Machine Learning
- NTN: Non Terrestrial Network
- OCC: Orthogonal Cover Code
- OFDM: Orthogonal Frequency Division Multiplexing
- OLPC: Open Loop Power Control
- PA: Power Amplifier
- PC: Power Control
- PD: Phase Discontinuity
- PUCCH: Physical Uplink Control Channel
- PUSCH: Physical Uplink Shared Channel
- RF: Radio Frequency
- RL: Reinforcement Learning
- RRC: Radio resource Control
- TA: Timing advance
- UCB: Upper-Confidence Bound
- UE: User Equipment

### DETAILED DESCRIPTION

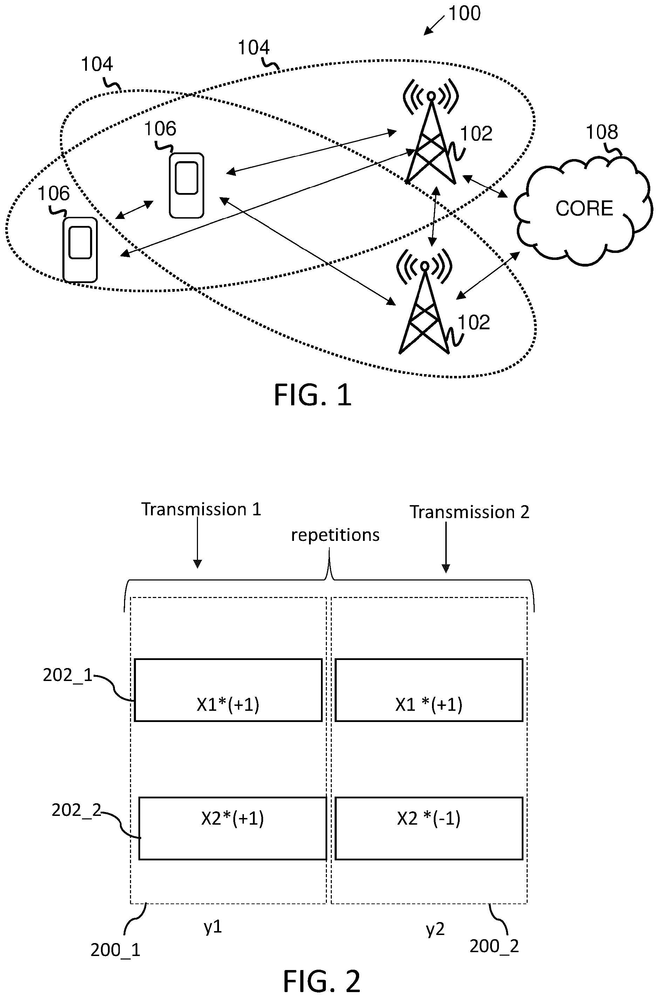

Fig. 1 illustrates an example of a communication network 100 to which examples of the disclosure can be applied. The communication network 100 is a cellular communication network. The communication network 100 comprises network access nodes 102. The network access nodes 102 provide one or more cells 104. The cells 104 may define a coverage area or a service area of the corresponding network access node 102.

The network access nodes 102 can provide one or more user equipments (UE) 106 with wireless access to the communication network. The wireless access may comprise downlink (DL) communication from the network access node 102 to the UE 106 and uplink (UL) communication from the UE 106 to the network access node 102. Examples of uplink channels comprise physical uplink control channel (PUCCH) for transmitting control information and physical uplink shared channel (PUSCH) for transmitting data towards the network access nodes 102. Examples of downlink channels comprise physical downlink control channel (PDCCH) for transmitting control information and physical downlink shared channel (PDSCH) for transmitting data towards the UE 106.

There may be a plurality of UEs 106 in the network 100. Respective UEs 106 can be served by the same or by different network access nodes 102.

If the communication network 100 comprises multiple network access nodes 102 the network access nodes 102 can be connected to each other via an interface. LTE specifications refer to such an interface as an X2 interface. An interface between an LTE node and a 5G node, or between two 5G nodes can be called an Xn interface.

The network access nodes 102 can be further connected via another interface to a core network 108 of the communication network 100. The core network 108 can comprise core network nodes. The LTE specifications specify the core network as an evolved packet core (EPC), and the core network may comprise such as a mobility management entity (MME) and a gateway node. The MME may handle mobility of terminal devices in a tracking area encompassing a plurality of cells and handle signalling connections between terminal devices such as the UEs 106 and the core network 108. The gateway node may handle data routing in the core network 108 and to/from terminal devices such as the UEs 106. The 5G specifications specify the core network as a 5G core (5GC). The 5G core may comprise, for example, an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example. In other types of network other types of entities can be provided within the core network 108.

In networks such as the network 100 in Fig. 1 joint channel estimation (JCE) for physical uplink shared channel (PUSCH) can be used to enhance uplink (UL) coverage for both data channels and control channels. JCE works on the principle that bundling de-modulation reference signal (DMRS) over different slots (consecutive or nonconsecutive) across repetitions can improve the channel estimation accuracy at a network node 102. This is particularly true for physical uplink control channel (PUCCH)/PUSCH of UEs 106 at a cell edge.

To allow for JCE to take place phase continuity across slots for JCE should be maintained at the user equipment (UE) side to compensate for variability of the radio frequency (RF) circuits of the UEs 106 over time. The phase continuity must be guaranteed at the UE 106 for the JCE operation at the network node 102 to yield the expected results. The JCE operation is performed blindly by the network node 102 with regards to phase continuity. That is, the JCE operation is performed by the network node 102 without knowledge of the phase continuity at the UE 106.

A phase change at transmitter side (that is, the UE 106) entails a rotation of the received sample in frequency domain at receiver side (that is, the network node 102). In this context, the network node 102 has no mechanism to detect if such rotation is taking place. From the perspective of the network node 102, the evolution over time of the phase of the signals transmitted by UE 106, and thus the phase continuity or discontinuity may depend on both predictable and unpredictable events or aspects. The events or aspects can comprise, but are not limited to:
∘ **Events known at network node 102:** These are events for which it can be predicted whether the event will cause phase discontinuity or not. Example events comprise transmit precoder phase, network-assisted timing adjustment, frequency resource allocation, transmit waveform change (CP-OFDM <-> DFT-s-OFDM), DL occasion monitoring.
∘ **Events unknown at network node 102:** which refers to events that are unpredictable as to whether a certain event will cause a phase discontinuity. Example events comprise actual transmit power at the UE 106 (open loop power control, OLPC), UE-dependent time adjustments, impairments, and unexpected events at the RF stage of the UE 106.

The predictable events are not expected to be problematic to handle in the context of JCE, given that very specific requirements will exist in this sense. However examples of this disclosure provide a mechanism for handling unpredictable events by which the UE 106 might not maintain phase continuity.

Also in networks 100 such as the networks of Fig. 1 orthogonal cover codes (OCC) based multiplexing can be used to increase capacity of the network 100. This can be particularly for UEs 106 close to a cell edge which benefit from repetitions.

Fig. 2 shows the principle of OCC. In this example two UEs are transmitting two PUSCH repetitions in the same time-frequency resources. For the transmissions, the two UEs apply different OCCs to their transmission signal. In this case the transmission signals are assumed to stay constant across the repetitions. The application of the different OCCs allows a receiver of a network node 102 to receive (that is, demodulate and decode) the signals of each UE without the interference of the signals from the other UE.

In the example shown in Fig. 2 a first UE1 is applying the OCC [1, 1] whereas a second UE2 is applying the OCC [1, -1]. The first UE1 has a signal x1 and the second UE2 has a signal x2.

Two repetitions of the transmission are shown in Fig. 2. In the first transmission 200_1 the first UE1's PUSCH 202_1 comprises x₁*(+1) and the second UE2's PUSCH 202_2 comprises x₂*(+1). In the second transmission 200_2 the first UE1's PUSCH 202_1 comprises x₁*(+1) and the second UE2's PUSCH 202_2 comprises x₂*(+1).

The following equations indicate how this works in mathematical form. In the following equations x₁ and x₂ are the signals transmitted by UE1 and UE2, respectively and in both repetitions. y₁ and y₂ are the total signals received by the receiver of the network node 102 in the first and second repetition, respectively. $\left\{\begin{matrix}{y}_{1} = \left(+1\right) ∗ {x}_{1} + \left(+1\right) ∗ {x}_{2} \\ {y}_{2} = \left(+1\right) ∗ {x}_{1} + \left(-1\right) ∗ {x}_{2}\end{matrix}\right. \to \left(+1\right) ∗ {y}_{1} + \left(-1\right) ∗ {y}_{2} = 2 ∗ {x}_{2} ;$ $\left\{\begin{matrix}{y}_{1} = \left(+1\right) ∗ {x}_{1} + \left(+1\right) ∗ {x}_{2} \\ {y}_{2} = \left(+1\right) ∗ {x}_{1} + \left(-1\right) ∗ {x}_{2}\end{matrix}\right. \to \left(+1\right) ∗ {y}_{1} + \left(+1\right) ∗ {y}_{2} = 2 ∗ {x}_{1} ;$

In these equations, the network node 102 retrieves the signal of UE2 without interference from the signal from UE1 by cross-correlating the two received signals y₁ and y₂ with the OCC used by UE2 (that is, [1, -1]). For generating the digital cross-correlation a suitable operation for use is "sum of the products" at time "zero", which is shown in Eq (1). Correspondingly, the outcome of applying the OCC corresponding to UE1 (that is, [+1, +1] is shown in Eq. (2), where it is seen that the result yields the signal x₁ which was originally transmitted by UE1.

The example above is given without channel impairments and additive noise for simplicity of description. It is to be noted that channel impairments will always affect the received signal at the network node 102. Therefore, for the OCC solution to effectively work in actual operation, the channel response across the repetitions should not change. The channel response comprises not only the response of the physical channel but also the response of the UE RF circuits. One important aspect of this variability of UE RF circuits response over time is referred to as phase continuity. Phase continuity is therefore a necessary requirement for a UE 106 performing PUSCH repetitions with OCC as well as for JCE. That is a UE 106 is mandated to maintain phase continuity across PUSCH repetitions with OCC. If a UE 106 fails to maintain the phase continuity across the PUSCH repetitions with OCC, not only the performance of the UE 106 itself degrades but also it causes significant interference to the other multiplexed UEs 106 and hence it causes system performance drop.

A list of UE actions which cause phase discontinuity across PUSCH transmissions of PUSCH repetition type A are defined as events in TS 38.214 clause 6.1.7 (listed in table 1 below. These events will therefore create problems in some scenarios (such as OCC operation because they will not allow a network node 102 receiver to coherently combine the PUSCH repetitions and remove interference of one UE 106 for the decoding operation of the other multiplexed UEs 106).

**Table 1**

| | | |
|---|---|---|
| TS 38.214 clause 6.1.7 | | |
| Events which cause power consistency and phase continuity not to be maintained across PUSCH transmissions of PUSCH repetition type A scheduled by DCI format 0_1 or 0_2, or PUSCH repetition Type A with a configured grant, or PUSCH repetition type B or TB processing over multiple slots, or PUCCH transmissions of PUCCH repetition, within the nominal TDW, are: | | |
| | | - A downlink slot or downlink reception or downlink monitoring based on *tdd-UL-DL-ConfigurationCommon* and *tdd-UL-DL-ConfigurationDedicated* for unpaired spectrum. |
| | | - The gap between any two consecutive PUSCH transmissions, or the gap between any two consecutive PUCCH transmissions, exceeds 13 symbols for normal cyclic prefix or exceeds 11 symbols for extended cyclic prefix. |
| | | - The gap between any two consecutive PUSCH transmissions, or the gap between any two consecutive PUCCH transmissions, does not exceed 13 symbols but other uplink transmissions are scheduled between the two consecutive PUSCH transmissions or the two consecutive PUCCH transmissions. |
| | | - For PUSCH transmissions of PUSCH repetition type A, or PUSCH repetition type B or TB processing over multiple slots, a dropping or cancellation of a PUSCH transmission according to clause 9, clause 11.1 and clause 11.2A of [6, TS 38.213]. |
| | | - For PUCCH transmissions of PUCCH repetition, a dropping or cancellation of a PUCCH transmission according to clause 9, clause 9.2.6 and clause 11.1 of [6, TS 38.213]. |
| | | - For any two consecutive PUSCH transmissions of PUSCH repetition type A, or PUSCH repetition type B, and when two SRS resource sets are configured in *srs-ResourceSetToAddModList* or *srs-ResourceSetToAddModListDCI-0-2* with higher layer parameter *usage* in *SRS-ResourceSet* set to 'codebook' or 'noncodebook', a different SRS resource set association is used for the two PUSCH transmissions of PUSCH repetition type A, or PUSCH repetition type B, according to Clause 6.1.2.1. |
| | | - For any two consecutive PUCCH transmissions of PUCCH repetition, and when a PUCCH resource used for repetitions of a PUCCH transmission by a UE includes first and second spatial relations or first and second sets of power control parameters, as described in [10, TS 38.321] and in clause 7.2.1 of [6, TS 38.213], different spatial relations or different power control parameters are used for the two PUCCH transmissions of PUCCH repetition, according to Clause 9.2.6 of [6, TS 38.213]. |
| | | - Uplink timing adjustment in response to a timing advance command according to clause 4.2 of [6, TS 38.213]. |
| | | - Frequency hopping. |
| | - For reduced capability half-duplex UEs, | |
| | | - a dropping or cancellation of a PUSCH or PUCCH transmission according to clause 17.2 of [6, TS 38.213] or |
| | | - an overlapping of the gap between two consecutive PUSCH or two consecutive PUCCH transmissions and any symbol of downlink reception or downlink monitoring |

It is to be noted that uplink timing advance (TA) adjustments are mentioned in this list as creating problems in phase continuity at the UE 106. However, even if not mentioned in this list, power control (PC) adjustments across PUSCH repetitions can create problems with phase and power consistency. These two events are especially relevant for non-terrestrial network (NTN) UEs because NTN UEs are supposed to perform autonomous TA and PC updates during operation. These updates are based on global navigation satellite system (GNSS) location updates. The updates enable synchronization at the network node 102. Such autonomous TA and PC updates can occur at any time within PUSCH repetitions, and correct handling of such events is needed at the UE 106 so as to maintain phase continuity across the repetitions.

The amount of phase discontinuity that is caused by an event, and therefore the impact of the event on the performance of the network, can be dependent upon factors at the UE 106 such as temperature, PA gain state, the entity of the event itself, or any other suitable factor. The same event might cause a negligible phase discontinuity in a first set of circumstances but might cause a non-negligible phase discontinuity in a second set of circumstances.

Examples of the disclosure provide a mechanism that can be used to improve performance in case of event occurrence within a transmission. Examples of the disclosure enable a prediction to be made as to whether the event will generate a non-negligible phase discontinuity and enable the network node to be informed accordingly. A phase discontinuity can be considered to be non-negligible if it satisfies predetermined conditions. The conditions could be a threshold relating to an impact on performance or any other suitable criteria.

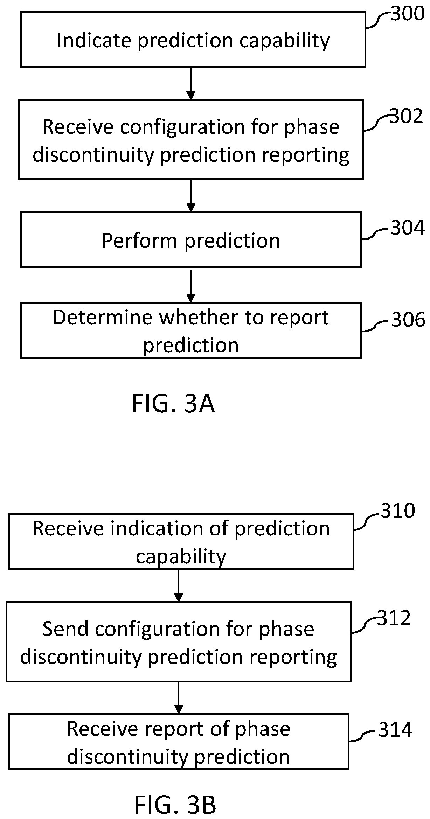

Figs. 3A and 3B show example methods that can be used in implementations of the disclosure. The example method of Fig. 3A could be implemented by a UE 106 or any other suitable device. The example of Fig. 3B could be implemented by a network node 102. The network node 102 could be an access node such as a gNB or any other suitable type of network node. The method of Fig. 3B corresponds to the method of Fig. 3A in that the network node 102 that performs the method of Fig. 3B can provide access to the network 100 for the UE 106 that performs the method of Fig. 3A.

The method implemented by the UE 106 comprises, at block 300, indicating to a network node 102 a capability of the UE 106 for phase discontinuity prediction. For example the UE 106 can indicate that the UE 106 has an ML model or any other suitable means that can be used to predict phase discontinuity for relevant events and circumstances.

At block 302 the UE 106 receives a configuration from the network node 102. The configuration is for phase discontinuity prediction outcome reporting. The configuration comprises at least one reporting indication method. That is, the configuration can indicate how the phase discontinuity prediction outcome should be reported. The configuration can also comprise one or more reporting conditions.

In some examples the one or more reporting conditions can comprise one or more thresholds for a probability of phase discontinuity. The different the different thresholds can be associated with different use cases or scenarios.

The configuration can be received via any suitable means. For example, the configuration could be received via radio resource control (RRC) signaling, or by downlink control information (DCI), or by another suitable means.

At block 304 the UE 106 performs phase discontinuity prediction. The phase discontinuity prediction can be performed using a machine learning model or any other suitable means.

In some examples the phase discontinuity prediction can relate to a probability of a single event causing a phase discontinuity. In other examples the phase discontinuity prediction can relate to a probability of multiple events causing a cumulative phase discontinuity.

A time duration for which the phase discontinuity is predicted can comprise a slot duration. In some examples the time duration can be indicated and can relate to one or more scenario configurations. The scenario configurations could relate to OCC configurations or any other suitable factors. The time duration could be indicated implicitly or explicitly.

At block 306 the UE 106 determines whether to report an outcome of the phase discontinuity prediction. The determination is made based on the received configuration. If the reporting conditions of the configuration are satisfied then the phase discontinuity prediction outcome should be reported in accordance with the reporting indication method. If the reporting conditions of the configuration are not satisfied then the phase discontinuity prediction outcome is not reported.

In some examples the reporting conditions could comprise a threshold for a probability of the predicted phase discontinuity calculation. For instance, if the probability that the predicted phase discontinuity is non-negligible is above a threshold then the reporting conditions can require that the phase discontinuity prediction is reported. Conversely, if the probability that the predicted phase discontinuity is non-negligible is below a threshold then the reporting conditions can require that the phase discontinuity prediction is not reported. This enables the network node 102 to be informed if a phase discontinuity that could affect system performance is expected.

If it is determined to report the outcome of the phase discontinuity prediction then the outcome of the prediction is reported in accordance with the reporting conditions. In some examples the reporting indication method can comprise a bit indicating whether a reporting condition is satisfied. For example, a bit value of 1 could indicate that the probability that the predicted phase discontinuity is non-negligible is above a threshold and a bit value of 0 could indicate that the probability that the predicted phase discontinuity is non-negligible is below a threshold.

In some examples the reporting indication method can comprise a value indicating the outcome of the phase discontinuity prediction. This could be a value indicating the magnitude of the phase discontinuity prediction. This value could then be used by the network node to determine if the phase discontinuity is negligible or non-negligible. In other examples the reporting indication method can comprise a value indicating a probability that an event or multiple events causes a non-negligible phase discontinuity, that is a phase discontinuity that is above a given threshold. The probability of the non-negligible phase discontinuity can be determined based on the phase discontinuity and a threshold.

In some examples the reporting indication method can comprise an indication of a clear time duration for which the phase discontinuity is less than a threshold. This can inform the network of a clear time duration for which any phase discontinuity is negligible. The threshold can be configured or dynamically signaled from the network node 102. In some examples the reporting conditions can comprise an indication of a maximum clear time duration that the UE 106 is to report.

In some examples the configuration can comprise multiple different reporting conditions. The different reporting conditions can apply to different scenarios. For instance, a first reporting condition can be for use in a first scenario and a second reporting condition can be for use in a second scenario. In such cases the UE 106 can determine which reporting conditions are to be used based on a determined scenario.

In some examples the UE 106 can also receive an indication of event parameters and one or more thresholds for a probability of phase discontinuity associated with the event parameters. This can enable different phase discontinuity thresholds to be associated with different events.

Fig. 3B shows a method that could be implemented by a network node 102. The network node 102 can correspond to the UE 106 that implements the method of Fig. 3A in that the UE 106 that implements the method of Fig. 3A can send an indication of the prediction capability to the network node 102 that then performs the method of Fig. 3B.

At block 310 the method comprises receiving from a UE 106 a capability of the UE 106 for phase discontinuity prediction. For example the UE 106 can inform the network node 102 that the UE 106 has an ML model or any other suitable means that can be used to predict phase discontinuity for relevant events and circumstances.

At block 312 the network node 102 sends a configuration to the UE 106. The network configuration is for phase discontinuity prediction outcome reporting. The configuration comprises at least one reporting indication method. That is, the configuration can indicate how the phase discontinuity prediction outcome should be reported. The configuration can also comprise one or more reporting conditions.

The reporting conditions could comprise a threshold for a probability of the predicted phase discontinuity calculation. For instance, if the probability that the predicted phase discontinuity is non-negligible is above a threshold then the reporting conditions can require that the phase discontinuity prediction is reported. Conversely, if the probability that the predicted phase discontinuity is non-negligible is below a threshold then the reporting conditions can require that the phase discontinuity prediction is reported not. This enables the network node 102 to be informed if a phase discontinuity that could affect system performance is expected.

The configuration can be sent via any suitable means. For example, the configuration could be sent via radio resource control (RRC) signaling, or by downlink control information (DCI), or by another suitable means.

At block 314 the network node 102 receives a report from the UE 106. The received report indicates the outcome of the phase discontinuity prediction. The report is based on the configuration. That is, whether the report is sent or not can be determined based on the reporting conditions in the configuration. Also, the reporting indication method used in the report determined by the reporting indication method of the configuration.

In some examples the reporting indication method can comprise a bit indicating whether a reporting condition is satisfied. For example, a bit value of 1 could indicate that the probability that the predicted phase discontinuity is non-negligible is above a threshold and a bit value of 0 could indicate that the probability that the predicted phase discontinuity is non-negligible is below a threshold.

In some examples the reporting indication method can comprise a value indicating the outcome of the phase discontinuity prediction. This could be a value indicating the magnitude of the phase discontinuity prediction. This value could then be used by the network node 102 to determine if the phase discontinuity is negligible or non-negligible. In other examples the reporting indication method can comprise a value indicating a probability that an event or multiple events causes a non-negligible phase discontinuity, that is a phase discontinuity that is above a given threshold. The probability of the non-negligible phase discontinuity can be determined based on the phase discontinuity and a threshold.

In some examples the reporting indication method can comprise an indication of a clear time duration for which the phase discontinuity satisfies a reporting condition. For example, this could be a clear time duration for which the phase discontinuity is less than a threshold. This can inform the network of a clear time duration for which any phase discontinuity is negligible. The threshold can be configured or dynamically signaled from the network node 102. In some examples the reporting conditions can comprise an indication of a maximum clear time duration that the UE 106 is to report.

In some examples the phase discontinuity prediction can relate to a probability of a single event causing a phase discontinuity. In other examples the phase discontinuity prediction can relate to a probability of multiple events causing a cumulative phase discontinuity.

If the network node 102 receives an indication that the phase discontinuity prediction is above a threshold, or if the network node 102 determines that the phase discontinuity prediction is above a threshold then the network node 102 can take one or more appropriate actions. For example the network node 102 could adjust one or more reporting conditions of the configuration or could disable reporting of the phase discontinuity prediction.

Examples of the disclosure therefore enable a UE 106 to perform phase discontinuity predictions and report this to the network node 102. This prior knowledge of the level of phase discontinuity can assist the network node 102 to avoid performance drop. In cases such as OCC this also helps to protecting other UEs 106 and system performance.

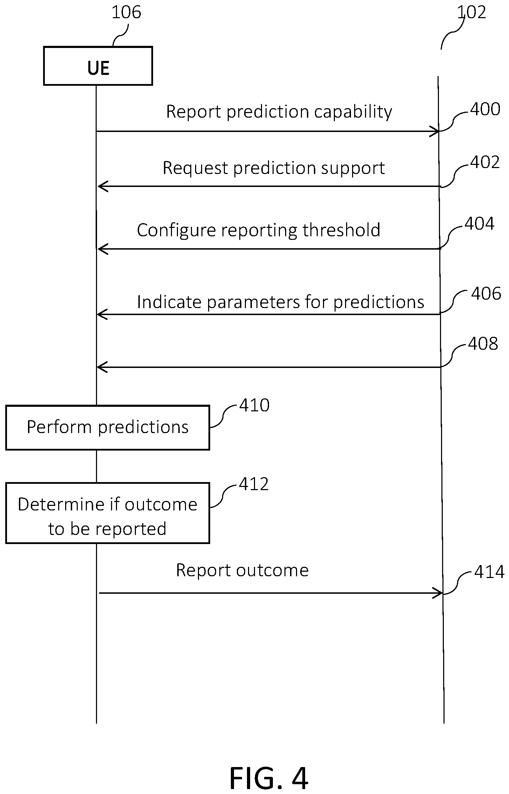

Fig. 4 shows an example signalling procedure that could be used in some examples of the disclosure.

At block 400 the UE 106 indicates to the network node 102 a capability of the UE 106 for phase discontinuity prediction. This could be an indication that the UE 106 has machine learning capability or any other suitable type of capability.

At block 402 the network node 102 requests support from the UE 106 for predicting phase discontinuity. The network node 102 can enable the predictions at the UE 106. The network node 102 can send a configuration indicating the reporting conditions and also a preferred reporting indication method. For instance, the network node 102 could indicate that it would prefer to use a single bit as the reporting indication method. The network node could indicate the threshold for the probability of the phase discontinuity. For instance, the threshold could be 0.9. Other suitable values could be used in other examples.

At block 404 the network node 102 can provide thresholds for use in the phase discontinuity prediction and reporting to the UE 106. In some use cases, depending on the scenario defined at the network node 102, the network node 102 can send a list of one or more thresholds to the UE 106. The thresholds could be RRC-configured by the network node 102.

In some examples multiple tables of thresholds could be pre-configured. The multiple tables of thresholds could be defined in a specification or in any other suitable manner. Respective tables can be associated with different scenarios. For instance, a first table of thresholds can be defined for OCC operation and can comprise multiple thresholds that are associated with different OCC characteristics or sizes. Other tables could be used for other scenarios. The thresholds in the tables can have any suitable level of granularity. In examples, where multiple tables of thresholds are available the network node 102 could provide, at block 404, an indication of which of the pre-configured tables the UE 106 is to use.

At block 406 the network node 102 can indicate the parameters that are to be used for the phase discontinuity prediction. For example, the network node 102 can indicate one or more event parameters or any other suitable information. As an example, the network node 102 could indicate to the UE 106 to adjust its timing advance (TA) starting from a certain slot n (that is, the event will be at the beginning of slot n). This could be indicated via media access control- control element (MAC-CE) or by any other suitable signalling. The UE 106 can use indicated TA as one input for the phase discontinuity prediction.

In some examples the network node 102 can determine the scenario for which the phase discontinuity prediction is needed. For example, it can determine if the phase discontinuity is associated with an OCC scenario and/or the OCC characteristics or if any other scenario applies. Based on this determination the network node 102 can determine the thresholds for the phase discontinuity or probability of phase discontinuity that are to be applied by the UE 102. At block 406 the network node 102 can send these thresholds to the UE 106.

At block 410 the UE performs the predictions of phase discontinuity. The predictions can be performed using a machine learning model or any other suitable means. The UE 106 can collect all the necessary inputs to enable the prediction. For example, the UE 106 can collect the inputs that are used by the machine learning model.

The output of the predictions could be the probability of a phase discontinuity. Other outputs could be used in other examples
At block 412 the UE 106 determines whether to report the outcome of the phase discontinuity prediction. The UE 106 can use the reporting conditions and thresholds that have been indicated by the network node 102 to make this determination. For instance, the threshold for reporting of the phase discontinuity could be a probability value of 0.9. Therefore, if the predicted probability of a phase discontinuity is above 0.9 the UE 106 would report this to the network node 102. Conversely, if the predicted probability of a phase discontinuity is below 0.9 the UE 106 would not report this to the network node 102.

If the UE 106 determines that the outcome is to be reported then, at block 414, the UE reports the outcome of the phase discontinuity prediction to the network node 102. Any suitable reporting indication method could be used. For example, the outcome could be reported as a single bit that indicates whether the predicted probability of a phase discontinuity is above or below a threshold. In other examples, a value of the probability could be transmitted, or any other suitable indication of the outcome.

The outcome could be reported using any suitable signalling. In some examples the outcome could be reported as part of the hybrid automatic repeat request - acknowledgement (HARQ-ACK) feedback or as part of an earlier transmission before the event.

If the UE 106 determines that the outcome is to be reported then the UE 106 would not send the report at block 414. For instance, if the predicted phase discontinuity is negligible or below the threshold the it does not need to be reported to the network node 102.

At block 416 the network node 102 can respond to the reported outcome. For instance, if a non-negligible phase discontinuity is predicted the network node 102 could drop the UE 106 in the scheduling of the OCC operation or could take additional processing steps to protect the performance of the network.

In examples of the disclosure the phase discontinuity prediction can be performed using a machine learning model. The machine learning model can comprise multiple defined processing steps, and can be similar to the processing instructions related to conventional program code. The difference between conventional program code and the machine learning model is that the instructions of the conventional program code are defined more explicitly at the programming time. The instructions of the machine learning model are defined by combining a set of predefined processing blocks (such as convolutions, data normalizations, other operators), where the weights of the model are unknown at the model definition time. The weights of the machine learning model are optimized by providing the machine learning model with a large amount of input and reference data, and the model weights then converge so that the machine learning model is trained to solve a given task. In this case the task is predicting whether an event will cause a non-negligible phase discontinuity. In examples of the disclosure, when the machine learning model is used, the machine learning model could be fixed and could correspond to a set of processing instructions.

In examples of the disclosure the machine learning model can reside in the UE 106. The machine learning model can be trained to provide predicted phase discontinuities as an output. This could be a value of the magnitude of the phase discontinuity or and indication of whether the phase discontinuity is above or below a threshold or any other suitable output.

The inputs that are provided to the machine learning model could comprise any inputs relating to factors that could affect the phase discontinuity. For example, the input to the machine learning model could comprise event parameters, such as TA parameters that are indicated by the network node 102, UE HW temperature, BW of the signal, RF circuit status (over time, hardware components can drift from their calibrated states, introducing phase discontinuities), history profile of PA gain (the history profile can impact the non-linearity at the current time), or any other relevant factor.

The machine learning model can be trained to provide a suitable output relating to a phase discontinuity prediction. The type of output that is provided by the machine learning model can be dependent on the scenario and use cases.

In some examples the output of the machine learning model can be a calculated probability that an event (or multiple events) causes phase discontinuity. The probability that an event (or multiple events) causes phase discontinuity can be calculated based on a comparison of a predicted phase discontinuity with a threshold phase discontinuity. An event (or multiple events) can be considered to cause phase discontinuity if the phase shift after the event is predicted be larger than a threshold.

The threshold phase discontinuity could be configured by the network node or it could be defined in a specification. For instance, the threshold phase discontinuity could be indicated as a reporting condition in the configuration from the network node 102. In such cases the threshold could be a fixed threshold. In other examples the threshold phase discontinuity could be dynamically indicated, via DCI, to the UE 106 once the machine learning model is enabled. In such example the threshold phase discontinuity could be use-case dependent. For instance, a stricter threshold can be assigned to an OCC scenario while a more relaxed threshold could be used for DMRS bundling case.

In some examples the UE 106 can be provided with a threshold to compare the phase discontinuity probability with. Based on this comparison the UE 106 can then signal one bit of 0/1 as the result. The use of a single bit to report the phase discontinuity can reduce the signaling overhead compared to the example where the UE 106 could signal the probability. However, the use of a single bit to report the phase discontinuity will also reduce any flexibility of the network node 102 to interpret a received probability in comparison with other factors that are only available at the network node 102.

The threshold phase discontinuity could be configured by the network node or it could be defined in a specification. For instance, the threshold phase discontinuity could be indicated as a reporting condition in the configuration from the network node 102. In such cases the threshold could be a fixed threshold. In other examples the threshold phase discontinuity could be dynamically indicated, via DCI, to the UE 106 once the machine learning model is enabled. In such example the threshold phase discontinuity could be use-case dependent. The network node 102 could adjust the threshold based on monitored performance of the machine learning model or depending a parameter update or depending on any other relevant factor. For instance, in the case of OCC, if OCC size is 2 higher threshold value could be used compared to a scenario where OCC size is 4.

In some examples the output of the machine learning model can be a predicted value of the phase discontinuity. This could be reported directly to the network node 102. This could be reported directly to the network node 102 without any processing by the UE 106. For example, the UE 106 does not need to determine if the predicted phase discontinuity is above or below a threshold. Reporting the predicted value of the phase discontinuity can increase the signalling overhead but it can provide more information to the network node 102 and less feedback and signalling from the network node 102 could be needed. The additional information could enable the network node 102 to interpret the phase discontinuity in comparison with other factors that are only available at the network node 102. Also the network node 102 can correct the phase discontinuity at the receiver and recover link performance.

In some examples the machine learning model can predict the phase discontinuity of a single event. If there are multiple events occurring within one transmission then the UE 106 can use the machine learning model to make a prediction for each of the events within the transmission. The UE 106 can then perform an additional step of determining the cumulative phase discontinuity for the multiple events or the cumulative probability that a non-negligible phase discontinuity will occur (that is, the probability that at least one event will result in a non-negligible phase discontinuity). In other examples, the machine learning model could be arranged to predict the phase discontinuity of multiple events. The result of the prediction for multiple events can be reported to the network node 102 in accordance with the relevant reporting conditions.

Where the prediction of the phase discontinuity is to account for multiple events a prediction window can be indicated by the network node. The prediction window can be indicated explicitly or implicitly. The prediction window could be indicated by RRC signalling or DCI. In such cases the UE 106 could send one bit indicated the cumulated probability of a phase discontinuity within the prediction window. In OCC examples, the prediction window could be based on the OCC period. In such cases the UE 106 could determine the prediction window once the OCC configuration is applied without this information having to be explicitly signaled by the network node 102.

In some cases, rather than give an indication of a predicted phase discontinuity or a probability of a phase discontinuity the machine learning model could predict a clear time duration within which the phase discontinuity is predicted to be below a threshold. That is, the machine learning model would predict a time period for which there would be no significant phase discontinuity. The output of the machine learning model would be based on probability of the phase discontinuity being less than a threshold for the time duration.

The machine learning model can be trained using any suitable procedure. In some examples, the machine learning model can be developed in a server based on collected data from the UE 106. The training data can be collected from the UE 106 because the UE 106 would have a comprehensive understanding and statistics of required inputs and actual output phase discontinuity when an event occurs. Accordingly, feedback from a network node 102 might not be needed in this case. In other examples the training data could be based on feedback from the network node 102. If the training data is based on feedback from the network node 102 then the training of the machine learning model can take into account the actual performance impact of any phase discontinuity. The metric based on which phase discontinuity is considered destructive (label 0) is if performance degradation is more than a threshold. The measurement of performance degradation is performed by the network node 102 and the feedback is provided as 0/1 to the training entity. Such training is scenario dependent and also key performance indicator KPI relevant (to the end performance).

This provides for two types of training and development for the machine learning model. A first type is a KPI-aware machine learning model. For this type of machine learning model the feedback of the performance impact of phase discontinuity from the network node 102 is used. The machine learning model can then be trained to protect the performance measured be the network node 102. A second type is a UE-centric machine learning model. For this type of machine learning model the feedback from the network node 102 is not needed because the machine learning model is only trained to predict a phase discontinuity value. The management of the output predicted phase discontinuity values is then controlled by the UE 106 and/or the network node 102 during the inference phase.

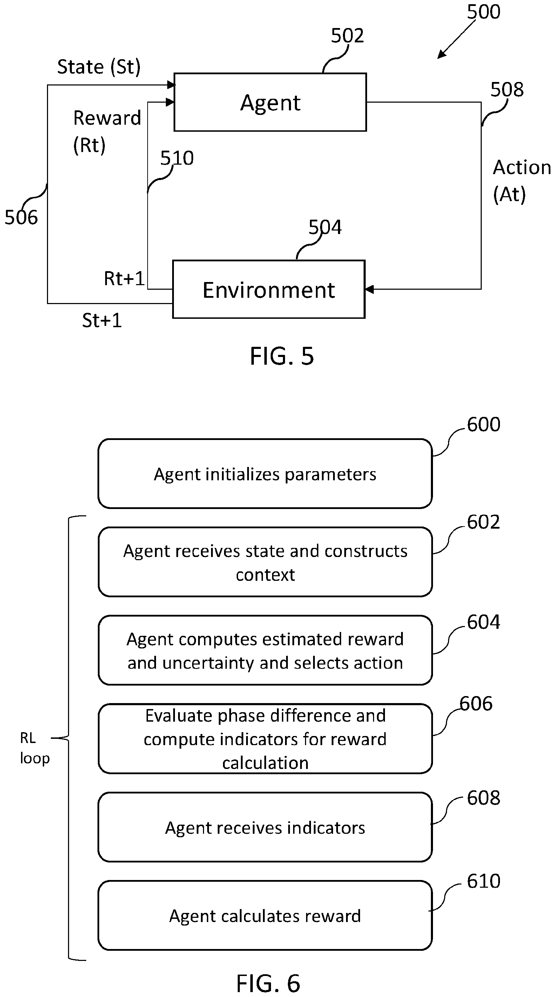

Fig. 5 shows an example machine learning model 500 that can be used in some examples. In this case the machine learning model 500 is a reinforcement learning (RL) model. Other types of model could be used in other examples.

The machine learning model 500 comprises an agent 502 and an environment 504. The agent 502 is a decision-making entity that interacts with the environment 504. It is arranged to observe the state of the environment 504, selecting actions, and receive feedback in the form of rewards or penalties. In examples of the disclosure the agent 502 can reside at the UE 106 for inference phase while the training of the model 500 can be performed offline.

The environment 504 represents the external system with which the agent 502 interacts. In implementations of the disclosure, the environment 504 represents the network and its dynamics. The environment can comprise UE 105 activities, hardware (HW) behaviour of the UE 106, network conditions, and any other relevant factors.

A state 506 is a representation of the environment 504 at a particular point in time. A state 506 captures all relevant information needed for decision-making by the agent 502. In examples of the disclosure a state can comprise factors such as: UE HW characteristics, signal bandwidth (BW), history profile of PA gain, events parameters values, and/or any other suitable information. The state 506 is provided as an input to the agent 502.

Actions 508 are the choices made by the agent 502 to influence the environment 504. The actions can be provided as an output of the agent 502. The set of possible actions available to the agent 502 depends on the specific environment 504. In examples of the disclosure the possible actions can be selected from available sets where the sets correspond to different levels of phase discontinuity.

The reward 510 is the feedback signal provided by the environment 504 to the agent 502 after taking an action 508 in a particular state. The reward 510 represents the immediate benefit or cost associated with the action 508. In this problem, the reward or penalty can include how good the estimated phase discontinuity is as compared to the actual phase discontinuity: $reward \left(or penalty\right) = f \left(\left|{pd}_{estimate}-{pd}_{actual}\right|\right)$ Where f is a function such as Sigmoid to scale the argument in order to have balanced impact of the estimation error.

Fig. 6 shows a method of using a machine learning model such as the RL model shown in Fig. 5. The example in Fig. 6 uses an RL contextual bandit model flow based on an upper-confidence bound (UCB) algorithm. Any suitable ML model and corresponding algorithm could be used.

At block 600 the agent 502 initializes parameters relating to the algorithm. The parameters could comprise exploration parameter α, regulation parameter λ, and for each action and action count Nₐ=0, feature vector Xₐ and parameter vector θₐ. The parameters that are used can depend on the algorithm that is used and any other relevant factors.

At block the 602 the agent 502 receives the state 506. The state 506 can comprise event parameters and local inputs. The state 506 is received at time t. The agent 602 uses the received state to construct a context vector xt.

At block 604 the agent 502 computes an estimate reward, uncertainty (confidence interval) and UCB_{a,t} for respective actions available to the agent 502. The agent then selects the action at with the highest UCB_{a,t}.

At block 606 the UE 106 evaluates the actual phase discontinuity and computes the related indicators for the calculation of the reward.

At block 608 the agent 502 receives the indicators. In some examples the indicators could be the actual value of the phase discontinuity or any other suitable information.

At block 610 the agent 502 calculates the rewards rₜ for the selected action at and updates the parameters for the selected action. The updates to the parameters can comprise updates to the feature matrix Xₐ, θₐ, Nₐ.

The agent 502 also buffers the observed reward for the selected action.

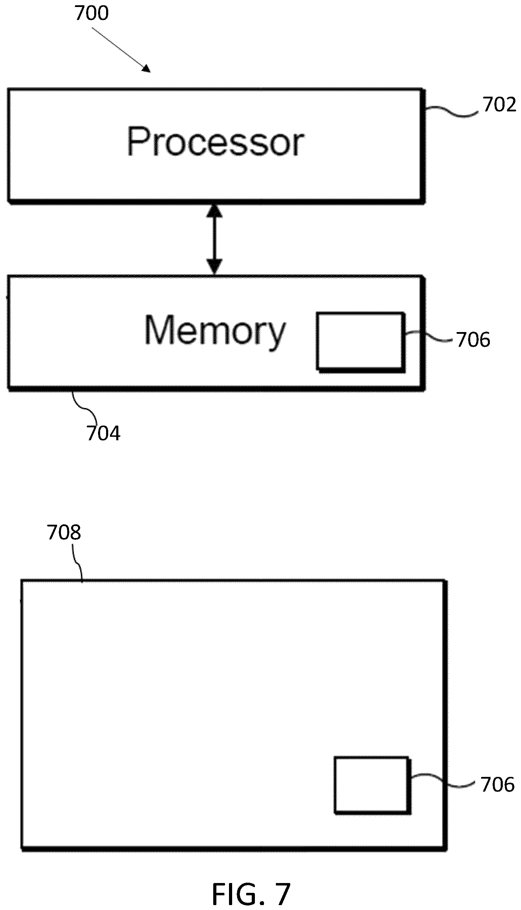

Fig. 7 shows an example controller 700. The controller 700 could be provided within a UE 106 or a network node 102, or any other suitable entity. Implementation of the controller 700 may be as controller circuitry. The controller 700 may be implemented in hardware alone, have certain aspects in software including firmware alone or can be a combination of hardware and software (including firmware). The controller 700 can provide an apparatus for implementing the disclosure of could be provided as part of an apparatus that implements the disclosure.

As illustrated in Fig. 7 the controller 700 can be implemented using instructions that enable hardware functionality, for example, by using executable instructions of a computer program 706 in a general-purpose or special-purpose processor 702 that may be stored on a machine readable storage medium (disk, memory etc.) to be executed by such a processor 702.

The processor 702 is configured to read from and write to the memory 704. The processor 702 may also comprise an output interface via which data and/or commands are output by the processor 702 and an input interface via which data and/or commands are input to the processor 702.

The memory 704 stores instructions, program 706, or code that controls the operation of the apparatus when loaded into the processor 702. The instructions, program 706, or code provide the logic and routines that enables the apparatus to perform the methods illustrated in the Figs. The processor 702 by reading the memory 704 is able to load and execute the instructions, program 706, or code.

In some examples where the controller 700 is provided within a UE 106, the controller therefore comprises means for:
indicating 300 to a network node 102 a capability of the UE 106 for phase discontinuity prediction;
receiving 302, from the network node 102, a configuration for phase discontinuity prediction outcome reporting, the configuration comprising at least a reporting indication method and one or more reporting conditions wherein the reporting indication method comprises an indication of a clear time duration for which phase discontinuity satisfies a reporting condition;
performing 304 phase discontinuity prediction; and
determining 306 whether to report an outcome of the phase discontinuity prediction based on the received configuration.

In some examples where the controller 700 is provided within a network node 102, the controller therefore comprises means for:
receiving 310 from a UE 106 a capability of the UE 106 for phase discontinuity prediction;
sending 312 to the UE 106, a configuration for phase discontinuity prediction outcome reporting, the configuration comprising at least a reporting indication method and one or more reporting conditions wherein the reporting indication method comprises an indication of a clear time duration for which phase discontinuity satisfies a reporting condition; and
receiving 314 from the UE 106 a report indicating the outcome of the phase discontinuity prediction where the report is based on the configuration.

The instructions, program 706, or code may arrive at the apparatus via any suitable delivery mechanism 708. The delivery mechanism 708 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 706. The delivery mechanism may be a signal configured to reliably transfer the computer program 706. The apparatus may propagate or transmit the computer program 706 as a computer data signal.

The term "non-transitory" as used herein, is a limitation of the medium itself that is, tangible, not a signal ) as opposed to a limitation on data storage persistency (for example, RAM vs. ROM).

The computer program 706 can comprise computer program instructions for causing a UE 106 to perform at least the following or for performing at least the following:
indicating 300 to a network node 102 a capability of the UE 106 for phase discontinuity prediction;
receiving 302, from the network node 102, a configuration for phase discontinuity prediction outcome reporting, the configuration comprising at least a reporting indication method and one or more reporting conditions wherein the reporting indication method comprises an indication of a clear time duration for which phase discontinuity satisfies a reporting condition;
performing 304 phase discontinuity prediction; and
determining 306 whether to report an outcome of the phase discontinuity prediction based on the received configuration.

The computer program 706 can comprise computer program instructions for causing a network node 102 to perform at least the following or for performing at least the following:
receiving 310 from a UE 106 a capability of the UE 106 for phase discontinuity prediction;
sending 312 to the UE 106, a configuration for phase discontinuity prediction outcome reporting, the configuration comprising at least a reporting indication method and one or more reporting conditions wherein the reporting indication method comprises an indication of a clear time duration for which phase discontinuity satisfies a reporting condition; and
receiving 314 from the UE 106 a report indicating the outcome of the phase discontinuity prediction where the report is based on the configuration.

The computer program instructions may be comprised in a computer program, a non-transitory computer readable medium, a computer program product, a machine-readable medium. In some but not necessarily all examples, the computer program instructions may be distributed over more than one computer program.

Although the memory 704 is illustrated as a single component/circuitry it may be implemented as one or more separate components/circuitry some or all of which may be integrated/removable and/or may provide permanent/semi-permanent/ dynamic/cached storage.

Although the processor 702 is illustrated as a single component/circuitry it may be implemented as one or more separate components/circuitry some or all of which may be integrated/removable. The processor 702 may be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry including quantum processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:
(a) hardware-only circuitry implementations (such as implementations in only analog and/or digital circuitry) and
(b) combinations of hardware circuits and software, such as (as applicable):
   (i) a combination of analog, digital and/or quantum hardware circuit(s) with software/firmware and
   (ii) any or all portions of hardware processor(s) (including digital and/or quantum processor(s)) with software, and memory(ies) that work together to cause an apparatus, such as a mobile device, computing device or server, to perform various functions and
(c) any or all portions of hardware circuit(s) such as a microprocessor(s) and/or quantum processor(s) that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the claim element, a baseband integrated circuit or processor integrated circuit for a mobile device or a similar integrated circuit in a server, a cellular network device, or other computing or network device.

The blocks illustrated in the Figs. can represent steps in a method and/or sections of code in the computer program 706. The illustration of a particular order to the blocks does not necessarily imply that there is a required or preferred order for the blocks and the order and arrangement of the block can be varied. Furthermore, it can be possible for some blocks to be omitted.

Where a structural feature has been described, it may be replaced by means for performing one or more of the functions of the structural feature whether that function or those functions are explicitly or implicitly described.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

As used herein, the terms "the at least one" and "the one or more" mean "any one of the at least one" and "any one of the one or mor" respectively.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. A user equipment (UE) comprising:
at least one processor; and
at least one memory storing instructions that, when executed by the at least one processor, cause the UE to perform at least:
indicating to network node a capability of the UE for phase discontinuity prediction;
receiving, from the network node, a configuration for phase discontinuity prediction outcome reporting, the configuration comprising at least a reporting indication method and one or more reporting conditions wherein the reporting indication method comprises an indication of a clear time duration for which phase discontinuity satisfies a reporting condition;
performing phase discontinuity prediction; and
determining whether to report an outcome of the phase discontinuity prediction based on the received configuration.

2. The UE of claim 1 wherein the reporting condition comprises one or more thresholds.

3. The UE of claim 2 wherein the one or more thresholds are configured or dynamically signaled from the network node.

4. The UE of any of claims 1 to 3 wherein the reporting conditions comprise an indication of a maximum clear time duration that the UE is to report.

5. The UE of any of claims 1 to 4 wherein the phase discontinuity prediction relates to one of:
a probability of a single event causing a phase discontinuity; and
a probability of multiple events causing a cumulative phase discontinuity.

6. The UE of any of claims 1 to 5 wherein the phase discontinuity prediction is performed using a machine learning model.

7. The UE of any of claims 1 to 6 wherein the one or more reporting conditions comprise at least one of a threshold for a phase discontinuity consideration; or threshold for a probability of phase discontinuity calculation.

8. The UE of any of claims 1 to 7 wherein the configuration is received via at least one of;
radio resource configuration signalling; and
downlink control information.

9. The UE of any of claims 1 to 8 wherein the one or more reporting conditions received from the network node comprise a first reporting condition for use in a first scenario and a second reporting condition for use in a second scenario.

10. A network node comprising:
at least one processor; and
at least one memory storing instructions that, when executed by the at least one processor, cause the network node to perform at least:
receiving from a UE a capability of the UE for phase discontinuity prediction;
sending to the UE, a configuration for phase discontinuity prediction outcome reporting, the configuration comprising at least a reporting indication method and one or more reporting conditions wherein the reporting indication method comprises an indication of a clear time duration for which phase discontinuity satisfies a reporting condition; and
receiving from the UE a report indicating the outcome of the phase discontinuity prediction where the report is based on the configuration.

11. The network node of claim 10 wherein the reporting condition comprises one or more thresholds.

12. The network node of claim 11 wherein the at least one processor and the at least one memory cause the network node to perform configuring or dynamically signalling the threshold to the network node.

13. The network node of any of claims 10 to 12 wherein the reporting conditions comprise an indication of a maximum clear time duration that the UE is to report.

14. The network node of any of claims 10 to 13 wherein the phase discontinuity prediction relates to one of:
a probability of a single event causing a phase discontinuity; and
a probability of multiple events causing a cumulative phase discontinuity.

15. The network node of any of claims 10 to 14 wherein the one or more reporting conditions comprise at least one of a threshold for a phase discontinuity calculation; or a threshold for a probability of phase discontinuity.
